# EUROPEAN PATENT APPLICATION

(11) **EP 4 333 120 A1**
(43) Date of publication of application: **06.03.2024**
(21) Application number: 22795894.9
(22) Date of filing: 28.04.2022
(51) Int. Cl.: H01M 4/505, C01G 45/02, C01G 51/00, C01G 53/00, H01M 4/525

(54) **POSITIVE ELECTRODE ACTIVE MATERIAL FOR SECONDARY BATTERIES, AND SECONDARY BATTERY**

(30) Priority: 30.04.2021 JP 2021077661
(71) Applicant: Panasonic Intellectual Property Management Co., Ltd., Kadoma-shi, Osaka 571-0057 (JP)
(72) Inventor: SAITO, Hiroki, Kadoma-shi, Osaka 571-0057 (JP); ESAKI, Shogo, Kadoma-shi, Osaka 571-0057 (JP); HIBINO, Mitsuhiro, Kadoma-shi, Osaka 571-0057 (JP)
(74) Representative: Novagraaf International SA
(86) International application number: PCT/JP2022/019303
(87) International publication number: WO 2022/230981

(57) **Abstract**

A composite oxide comprising lithium and a transition metal, wherein at least a portion of the composite oxide has a crystal lattice of a hexagonal lattice, and an electron beam diffraction image obtained by irradiating an electron beam from a <2 -2 1> direction includes a first diffraction spot group and a second diffraction spot group, n being an integer of 1 or more, the first diffraction spot group has a {-3 1 8/n} spot and a {1 2 2/n} spot that appear in correspondence with a period of a unit lattice of the hexagonal lattice, and the second diffraction spot group has six spots that appear between a central {0 0 0} spot and the {-3 1 8/n} spot with a 1/7 period, and six spots that appear between the central {0 0 0} spot and the {1 2 2/n} spot with a 1/7 period.

## Description

### [Technical Field]

The present disclosure relates to a positive electrode active material for a secondary battery and a secondary battery.

### [Background Art]

Secondary batteries, particularly lithium ion secondary batteries, are expected as a power source for small consumer applications, power storage devices, and electric vehicles, because of their high output and high energy density. Recently, with a demand for a high energy density, a Li-excessive lithium transition metal oxide has been gaining attention (ref: Non-Patent Literature 1).

Non-Patent Literature 1 proposes a Li₂MnO₃-based Li-excessive lithium transition metal oxide.

### [Citation List]

### [Non-Patent Literature]

Non-Patent Literature 1
J Wu et al., J. Mater. Chem. A, 2020, 8, 18687-18697

### [Summary of Invention]

### [Technical Problem]

In the lithium transition metal oxide described in Non-Patent Literature 1, repetitive charge and discharge causes the crystal structure to collapse, causing a significant drop in the voltage and capacity.

### [Solution to Problem]

In view of the above, an aspect of the present disclosure relates to a composite oxide containing lithium and a transition metal, wherein at least a portion of the composite oxide has a crystal lattice of a hexagonal lattice, and an electron beam diffraction image obtained by irradiating an electron beam from a <2 -2 n> direction includes a first diffraction spot group and a second diffraction spot group, n being an integer of 1 or more; the first diffraction spot group includes a {-3 1 8/n} spot and a {1 2 2/n} spot that appear in correspondence with a period of a unit lattice of the hexagonal lattice; and the second diffraction spot group includes six spots that appear between a central {0 0 0} spot and the {-3 1 8/n} spot with a 1/7 period, and six spots that appear between the central {0 0 0} spot and the {1 2 2/n} spot with a 1/7 period.

Another aspect of the present disclosure relates to a composite oxide containing lithium and a transition metal, wherein at least a portion of the composite oxide has a crystal lattice of a hexagonal lattice, and an electron beam diffraction image of the hexagonal lattice has a √7 × √7 superlattice.

Still another aspect of the present disclosure relates to a composite oxide containing lithium and a transition metal, wherein at least a portion of the composite oxide has a crystal lattice of a hexagonal lattice, an electron beam diffraction image of the hexagonal lattice includes a first diffraction spot group that appears in correspondence with a period of a unit lattice of the hexagonal lattice and a second diffraction spot group that appears between a center of the electron beam diffraction image and any spot of the first diffraction spot group with a 1/7 period.

Still another aspect of the present disclosure relates to a positive electrode active material for a secondary battery including the above-described composite oxide containing lithium and a transition metal.

Still another aspect of the present disclosure relates to a secondary battery including a positive electrode, a negative electrode, a separator interposed between the positive electrode and the negative electrode, and an electrolyte, wherein the positive electrode includes the above-described positive electrode active material for a secondary battery.

### [Advantageous Effects of Invention]

A composite oxide containing lithium and a transition metal is provided: when this composite oxide is used as a positive electrode active material for a secondary battery, a decrease in voltage and capacity of the secondary battery is suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a partially cutaway schematic oblique view of a secondary battery in an embodiment of the present disclosure.
[FIG. 2] FIG. 2 is an example of an electron beam diffraction image of a composite oxide containing lithium and a transition metal in an embodiment of the present disclosure.
[FIG. 3] FIG. 3 is a graph illustrating the relationship between the number of cycles and the discharge capacity in evaluation 1 on a secondary battery produced in Example.
[FIG. 4] FIG. 4 is a graph illustrating the relationship between the number of cycles and the average discharge voltage in evaluation 1 on a secondary battery produced in Example.
[FIG. 5] FIG. 5 is a graph illustrating the relationship between the number of cycles and the discharge capacity in evaluation 2 on a secondary battery produced in Example.
[FIG. 6] FIG. 6 is a graph illustrating the relationship between the number of cycles and the average voltage in evaluation 2 on a secondary battery produced in Example.
[FIG. 7] FIG. 7 is a graph illustrating changes in the relationship between the voltage and the discharge capacity along with charge and discharge of a secondary battery produced in Example.

### [Description of Embodiments]

In the following, exemplary embodiments of the composite oxide containing lithium and a transition metal, the positive electrode active material for a secondary battery, and the secondary battery of the present disclosure are described, but the present disclosure is not limited to the examples below. In the description below, specific numeral values and materials are given as examples, but other numeral values and materials can be used as long as effects of the present disclosure can be achieved. In this specification, the description of "numeral value A to numeral value B" includes the numeral value A to numeral value B, and can be read as "numeral value A or more and numeral value B or less". In the description below, when examples are given for a lower limit and an upper limit related to specific physical properties or conditions, unless the lower limit is the upper limit or more, any of the lower limits given as examples can be arbitrarily combined with any of the upper limits given as examples. When a plurality of materials are given as examples, one kind of them can be selected and used singly, or two or more kinds can be used in combination.

The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

In a composite oxide containing lithium and a transition metal of the embodiment of the present disclosure, at least a portion of the composite oxide has a crystal lattice of, for example, a hexagonal lattice of a space group R-3m, and an electron beam diffraction image obtained by irradiating an electron beam from a <2 -2 n> direction includes a first diffraction spot group and a second diffraction spot group, n being an integer of 1 or more. N is not particularly limited, but may be, for example, 1, 2, or 3.

### <Composite oxide A>

In the following, the composite oxide containing lithium and a transition metal, from which an electron beam diffraction image including the first diffraction spot group and the second diffraction spot group can be obtained, is also referred to as a "composite oxide A".

The first diffraction spot group has a {-3 1 8/n} spot and a {1 2 2/n} spot, each of which appears in correspondence with the periods of a unit lattice of the crystal lattice.

The second diffraction spot group has six spots that appear between a central {0 0 0} spot and a {-3 1 8/n} spot with a 1/7 period, and six spots that appear between the central {0 0 0} spot and a {1 2 2/n} spot with a 1/7 period.

In the electron beam diffraction image, when the second diffraction spot group appears in addition to the first diffraction spot group, the crystal lattice corresponding to the measurement target portion of the composite oxide A has a so-called √7 × √7 superlattice (also called "Maple-Leaf lattice"). The √7 × √7 superlattice is formed based on a layered crystal structure, in which a layer of lithium and a layer of a transition metal are laminated alternately. The base layered crystal structure may be a rock salt type.

In the region of the composite oxide having the √7 × √7 superlattice, in the transition metal layer, some of the transition metals are replaced with lithium, being in a state of Li rich (Li-excessive) compared with the base layered crystal structure. That is, the composite oxide A has a structure of the layered crystal structure, in which the lithium layer and the transition metal layer are laminated alternately and the transition metals in the transition metal layer are partially replaced with lithium.

The crystal structure in a Li-excessive state is generally unstable, but by highly controlling the arrangement of lithium present in the transition metal layer, durability of the crystal structure significantly improves. When the first diffraction spot group and the second diffraction spot group appear in the electron beam diffraction image, it is considered that the arrangement of lithium present in the transition metal layer is highly controlled, and in order of a certain degree or more.

It suffices that the electron beam diffraction image including the first diffraction spot group and the second diffraction spot group be obtained in at least a portion of the composite oxide A, but preferably, the electron beam diffraction image including the first diffraction spot group and the second diffraction spot group is obtained in a larger portion of the composite oxide A. For example, when an electron beam diffraction image is obtained by irradiating an electron beam from a <2 -2 1> direction to a sample powder of the composite oxide A prepared for electron beam diffraction at random plurality of measurement points (e.g., 10 or more points and 100 or less points), the first diffraction spot group and the second diffraction spot group are preferably observed at 30% or more, even 50% or more, particularly 70% or more of the measurement points.

The crystal structure has an improved durability when the composite oxide A includes the √7 × √7 superlattice in at least a portion of the crystal lattice, and therefore a large amount of lithium ions can be extracted therefrom electrochemically and reversibly. That is, the secondary battery including a positive electrode active material containing the composite oxide A is capable of storing and releasing a large amount of lithium, and therefore it has a high capacity. Moreover, along with the improvement in durability of the crystal structure of the composite oxide A, deterioration in voltage and capacity is hardly caused in the secondary battery.

The composite oxide A may have an operating voltage in the range of 2 V or more and up to 4.9 V or less relative to, for example, the oxidation-reduction potential of metal lithium. That is, the secondary battery including the positive electrode active material containing the composite oxide A may have a significantly wide potential window. Use of the composite oxide A allows a secondary battery to have a high voltage and a high energy density.

The composite oxide A may develop a capacity by redox reaction of cations of the transition metal and anions of oxygen in the range of the operating voltage. A part of the capacity developed when the composite oxide A stores or releases lithium is charge compensated by cations of the transition metal. Meanwhile, the remainder of the capacity that cannot be compensated by cations of the transition metal is charge compensated by anions of oxygen.

The composite oxide A has a composition represented by, for example, a general formula (1): LiₐM1_{b}O₂ (M1 is at least one selected from the group consisting of Cr, Mn, Fe, Co, and Ni, 0.14 ≤ a ≤ 1.2 (e.g., 0.143 ≤ a ≤ 1.143) and 0.8< b< 1). The range of "a" representing the amount of lithium increases or decreases when the composite oxide A stores or releases lithium. In a state where the depth of discharge (DOD) is 0% (state of charge SOC = 100%), the larger the value "a", the higher the capacity of the composite oxide A. In view of achieving a high capacity with the composite oxide A, the value "a" in the general formula (1) is preferably 0.56 ≤ a, more preferably 0.857 ≤ a or 1 ≤ a, even more preferably 1.143 ≤ a, with the DOD of 0%.

The composite oxide of the composition represented by the general formula (1) does not necessarily mean that the crystal lattice thereof includes the √7 × √7 superlattice. The composite oxide A including the √7 × √7 superlattice can be produced only when the arrangement of lithium present in the transition metal layer is highly controlled, and in order of a certain degree or more.

The crystal lattice does not have to belong to R-3m. The crystal lattice may slightly deform from R-3m. For example, it has been well known that even if it does not appear to be different visually, the deformed crystal lattice belongs to the space group C2/m in a strict sense, and the lattice constant on the same plane may be, in the a-axis direction, about √3 times the lattice constant of R-3m, and in the b-axis, the same length (Inorg. Chem, 2012, 51, 6211-6220). In this case, in an electron beam diffraction, a <2 -2 1> direction in R-3m is a < 0 -1 3> direction, and the {-3 1 8} spot and the {1 2 2} spot in R-3m correspond to the { 5 -1 3 } spot and the { -4 - 2 2} in C2/m, and six spots appear between these spots and the central {0 0 0} spot with a 1/7 period.

The composite oxide A may have a composition represented by, for example, a general formula (1a): LiₐMnₓM2_{b}O₂ (M2 is at least one selected from the group consisting of Cr, Fe, Co, and Ni, 0.14 ≤ a ≤ 1.2 (e.g., 0.143 ≤ a ≤ 1.143), 0.8< x+ b< 1, and 0< b< 1). The composition of the general formula (1) includes the composition of the general formula (1a). In the case of the general formula (1a), M1 includes Mn as an essential component. When M1 is only Mn, the general formula (1) is, for example, Li_{0.57}Mn_{0.86}O₂,Li_{1.14}Mn_{0.86}O₂, or the like. This composite oxide A has a high capacity, and by replacing a portion of Mn with M2, a higher capacity can be expected. The range of "b" representing the amount of M2 may be 0< b< 1, but more preferably 0.28 ≤ b ≤ 0.57. The preferable range for "a" is the same as the range in the case of the general formula (1).

### <Composite oxide A production method>

In the following, an example of a method for producing a composite oxide A is described.

First, a composite oxide having a composition represented by, for example, NaₐM1_{0.86}O₂ (Na_{c}M1₃O₇) (M1 is at least one selected from the group consisting of Cr, Mn, Fe, Co, and Ni, 0.14 ≤ a ≤ 1.14, and 0.5 ≤ c ≤ 4) is synthesized. For example, by mixing NaNO₃ and MnCO₃ at an atomic ratio of Na: Mn = 2: 3, and baking them in an oxidizing atmosphere (e.g., in an oxygen flow or in air), Na₂Mn₃O₇ can be obtained. Considering the oxidation number of M1, in view of increasing the reaction rate, it is preferably baked in an oxygen flow so that the oxygen concentration is higher than in air. The baking temperature may be, for example, 400°C or more, more preferably 500°C or more, or 550°C or more (e.g., 600°C). However, in the case of NaₐM1_{0.86}O₂ (e.g., Na₂Mn₃O₇), baking at a temperature too high may cause decomposition. In view of keeping the NaₐM1_{0.86}O₂ in a safe temperature range, the baking temperature is preferably 650°C or less. The baking time is suitably selected so that the reaction sufficiently proceeds, and is, for example, 10 hours or more.

Next, Na of NaₐM1_{0.86}O₂ (Na_{c}M1₃O₇) is replaced with Li. The method for replacing Na of NaₐM1_{0.86}O₂ (Na_{c}M1₃O₇) with Li is not particularly limited, and for example, a molten salt including lithium as cations can be mixed with NaₐM1₃O₇ so that lithium is excessive, and then heated. The composition of the molten salt is not particularly limited, and it may be a mixture of a plurality of kinds of lithium salt, for example, a mixture of a first lithium salt and a second lithium salt. The first lithium salt may be LiNO₃, Li₂SO₄, Li₂CO₃, LiOH, Li₂O, or the like. The second lithium salt may be lithium halide. More specifically, a mixture of LiNO₃ and LiCl may be cited, but it is not limited thereto. Depending on the composition of the molten salt used for ion exchange, a preferable reaction temperature is different. A higher temperature is preferable in terms of accelerating ion exchange. Meanwhile, an excessively high reaction temperature may denature the molten salt or the compound to be ion exchanged. A temperature of about slightly higher than the temperature that allows the salt to be in a molten state is preferable. The heating time is suitably selected so that the reaction sufficiently proceeds, and is, for example, 1 hour or more. LiₐM1_{0.86}O₂ (Li_{c}M1₃O₇) produced by replacing Na with Li may be washed with water and dried. The method in which a molten salt including Li is used is given as an example in the above, but the ion exchange method is not particularly limited. For example, ion exchange by refluxing, or electrochemical ion exchange may be performed.

### <Electron beam diffraction>

The electron beam diffraction image is obtained by observing a transmission electron microscopic image at an electron acceleration voltage of 200 kV using, for example, "JEM-ARM200F Dual-X" manufactured by JEOL Ltd., selecting the position to be subjected to the diffraction measurement with "Orius" manufactured by Gatan, Inc. The measurement conditions may be suitably changed. The sample for the electron beam diffraction is prepared by the Ar-ion milling method ("PIPS 691" manufactured by Gatan, Inc.) or a focused ion beam method ("Helios G4" manufactured by Thermo Fisher Scientific Inc.).

Next, a secondary battery of the embodiment of the present disclosure is described. The secondary battery includes, for example, the following positive electrode, negative electrode, electrolyte, and separator.

### [Positive electrode]

The positive electrode has a positive electrode current collector and a positive electrode mixture layer formed on a surface of the positive electrode current collector and having a positive electrode active material. The positive electrode mixture layer can be formed, for example, by applying a positive electrode slurry in which a positive electrode mixture containing a positive electrode active material, a binder, and the like is dispersed in a dispersion medium on a surface of the positive electrode current collector and drying the slurry. The dried coating film may be rolled, if necessary.

The positive electrode mixture layer contains a positive electrode active material as an essential component, and as an optional component, a binder, a thickener, a conductive agent, and the like can be contained. For the binder, thickener, and conductive material, known materials can be used.

The positive electrode active material includes at least the composite oxide A. The composite oxide A is, for example, secondary particles composed of a plurality of coagulated primary particles. The primary particles have a particle size of, generally 0.05 µm to 1 µm. The composite oxide A has an average particle size of, for example, 3 µm to 30 µm, preferably 5 µm to 25 µm. Here, the average particle size of the composite oxide A means a median diameter (D50) at which cumulative frequency is 50% in a volume-based particle size distribution measured with a laser diffraction particle size distribution analyzer. For the positive electrode active material, a known material can be mixed with the composite oxide A.

The composite oxide A may be formed into a composite with other composite oxide. For example, a solid solution of the composite oxide A and a composite oxide represented by LiMeO₂ (hereinafter, also referred to as a "composite oxide B") may be used. Me is at least one selected from the group consisting of, for example, Ni, Co, Al, Mn, Fe, Ti, Sr, Na, Mg, Ca, Sc, Y, Cu, Zn, Cr, and B, and preferably includes at least one selected from the group consisting of Ni, Co, and Mn. The entire composition of the solid solution is represented by, for example, xLiₐMn₃O₇·(1-x)LiMeO₂. The range of x is not particularly limited as long as 0< x, but a suitable range is 0.5< x ≤ 1.

The composite oxide B is, similarly with the composite oxide A, a layer structured composite oxide including lithium and a transition metal. The composite oxide B may be a composite oxide represented by, for example, LiₐNi_{b}M_{1-b}O₂ (where 0< a ≤ 1.2, 0.8 ≤ b ≤ 1, M may be at least one selected from the group consisting of Co, Al, Mn, Fe, Ti, Sr, Na, Mg, Ca, Sc, Y, Cu, Zn, Cr, and B). In particular, M is preferably at least one selected from the group consisting of Co, Mn, Al, and Fe. From the viewpoint of stabilities of the crystal structure, Al may be contained as M. The value "a" representing the amount of lithium increases or decreases by charge and discharge.

The composition of the composite oxide A or the solid solution including the composite oxide A can be measured by an inductively coupled plasma emission spectroscopy device (ICP-AES), an electron beam microanalyzer (EPMA), an energy dispersive X-ray analyzer (EDX), or the like.

For the positive electrode current collector, for example, a metal foil is used. For the positive electrode current collector material, stainless steel, aluminum, an aluminum alloy, titanium, and the like can be exemplified.

### [Negative electrode]

The negative electrode includes, for example, a negative electrode current collector, and a negative electrode active material layer formed on the surface of the negative electrode current collector. The negative electrode active material layer can be formed, for example, by applying a negative electrode slurry in which a negative electrode mixture containing a negative electrode active material, a binder, and the like is dispersed in a dispersion medium on a surface of the negative electrode current collector and drying the slurry. The dried coating film may be rolled, if necessary. That is, the negative electrode active material can be a mixture layer. A lithium metal foil or a lithium alloy foil may be attached to the negative electrode current collector.

The negative electrode active material layer contains a negative electrode active material as an essential component, and as an optional component, a binder, a conductive agent, a thickener, and the like can be contained. For the binder, conductive agent, and thickener, known materials can be used.

The negative electrode active material contains a material that electrochemically stores and releases lithium ions, a lithium metal, and/or a lithium alloy. For the material that electrochemically stores and releases lithium ions, a carbon material, an alloy-based material, and the like are used. Examples of the carbon material include graphite, soft carbon, hard carbon, and the like. For the alloy-based material, a material containing at least one metal that forms an alloy with lithium can be used, and examples thereof include silicon, tin, a silicon alloy, a tin alloy, and a silicon compound.

For the negative electrode current collector, for example, a metal foil is used. For the negative electrode current collector material, stainless steel, nickel, a nickel alloy, copper, a copper alloy, and the like can be exemplified.

### [Electrolyte]

The electrolyte includes a solvent and a solute dissolved in the solvent. The solute is an electrolytic salt that ionically dissociates in the electrolyte. The solute may include, for example, a lithium salt. The electrolyte component other than the solvent and solute is additives. The electrolyte may include various additives. The electrolyte is generally used in a liquid state, but may be in a state in which its flowability is restricted with a gelling agent and the like, and a solid electrolyte may be used as well.

For the solvent, an aqueous solvent or a nonaqueous solvent is used. For the nonaqueous solvent, for example, cyclic carbonate, chain carbonate, cyclic carboxylate, chain carboxylate, etc. are used. A kind of nonaqueous solvent may be used singly, or two or more kinds thereof may be used in combination.

Examples of the lithium salt include a lithium salt of chlorine containing acid (LiClO₄, LiAlCl₄, LiB₁₀Cl₁₀, etc.), a lithium salt of fluorine containing acid (LiPF₆, LiPF₂O₂, LiBF₄, LiSbF₆, LiAsF₆, LiCF₃SO₃, LiCF₃CO₂, etc.), a lithium salt of fluorine containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.) and the like. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less.

### [Separator]

A separator is interposed between the positive electrode and the negative electrode. The separator has excellent ion permeability and suitable mechanical strength and electrically insulating properties. The separator may be, for example, a microporous thin film, a woven fabric, or a nonwoven fabric.

The structure of the secondary battery can be, for example, a structure in which an electrode group formed by winding a positive electrode and a negative electrode with a separator interposed therebetween and an electrolyte are accommodated in an outer case. Alternatively, instead of the wound-type electrode group, other forms of electrode groups may be applied, such as a laminated electrode group in which the positive electrode and the negative electrode are laminated with a separator interposed therebetween. The secondary batteries may be of any form, for example, a cylindrical type, prismatic type, coin type, button type, laminated type, etc.

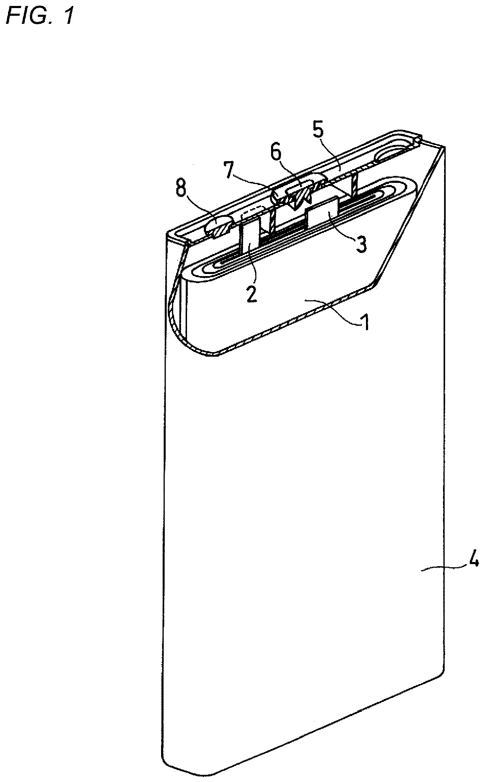

FIG. 1 is a partially cutaway schematic oblique view of a prismatic secondary battery in an embodiment of the present disclosure. The battery includes a bottomed prismatic battery case 4, and an electrode group 1 and an electrolyte (not shown) accommodated in the battery case 4. The electrode group 1 has a negative electrode in the form of a long strip, a positive electrode in the form of a long strip, and a separator interposed therebetween. The negative electrode current collector of the negative electrode is electrically connected to a negative electrode terminal 6 provided in a sealing plate 5 through a negative electrode lead 3. The negative electrode terminal 6 is insulated from the sealing plate 5 with a resin-made gasket 7. The positive electrode current collector of the positive electrode is electrically connected to a rear face of the sealing plate 5 through a positive electrode lead 2. That is, the positive electrode is electrically connected to the battery case 4 also serving as a positive electrode terminal. The periphery of the sealing plate 5 is fitted to the open end of the battery case 4, and the fitting portion is laser welded. The sealing plate 5 has an injection port for the electrolyte, and is sealed with a sealing plug 8 after the injection.

Hereinafter, the present disclosure will be specifically described based on Examples and Comparative Examples, but the present disclosure is not limited to the following Examples.

### <Example 1>

### [Positive electrode production]

NaNO₃ and MnCO₃ were mixed at an atomic ratio of Na: Mn = 2: 3, and baked in an oxygen flow at 600°C for 20 hours, thereby producing Na₂Mn₃O₇.

Then, lithium nitrate and lithium chloride were mixed at a molar ratio of LiNO₃: LiCl = 88: 12, thereby preparing a molten salt. The molten salt and Na₂Mn₃O₇ were mixed at an atomic ratio of Li: Na = 15: 1, and the produced mixture was heated at 280°C for 4 hours, replacing Na of Na₂Mn₃O₇ with Li, thereby producing Li_{0.57}Mn_{0.86}O₂ (Li₂Mn₃O₇).

Then, Li_{0.57}Mn_{0.86}O₂ (Li₂Mn₃O₇) was washed with water, and dried in air at 80°C for 12 hours, and further dried under vacuum at 105°C for 12 hours, thereby producing a dried composite oxide A (Li_{0.57}Mn_{0.86}O₂ (Li₂Mn₃O₇)).

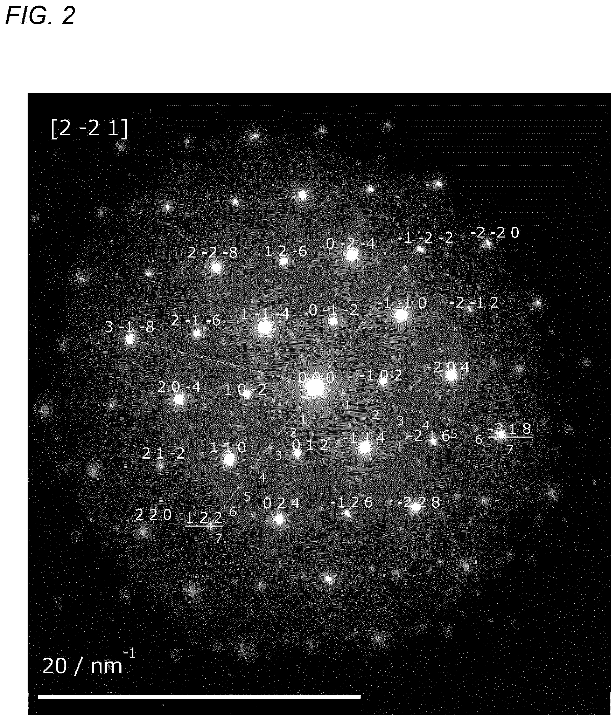

A sample for an electron beam diffraction measurement was prepared from the produced Li_{0.57}Mn_{0.86}O₂ (Li₂Mn₃O₇), and the crystal lattice of the composite oxide A was irradiated with an electron beam from a <2 -2 1> direction, thereby producing an electron beam diffraction image. The electron beam diffraction image is shown in FIG. 2.

In the electron beam diffraction image, the spot positioned at a center with the highest luminance is the {0 0 0} spot included in the first diffraction spot group. A plurality of other spots with a high luminance of the first diffraction spot group can be observed at positions apart from the {0 0 0} spot by a predetermined distance. The {-3 1 8} spot and the {1 2 2} spot can also be observed as the spots of the first diffraction spot group.

On the straight line connecting the {0 0 0} spot and the {-3 1 8} spot, six spots with a low luminance included in the second spot group are observed at positions almost equally dividing the distance between the {0 0 0} spot and the {-3 1 8} spot into seven. Similarly, at positions almost equally dividing the distance between the {0 0 0} spot and the {1 2 2} spot into seven, six spots with a low luminance included in the second spot group are observed.

The produced Li_{0.57}Mn_{0.86}O₂ (Li₂Mn₃O₇), acetylene black, and polyvinylidene fluoride were mixed at a mass ratio of 7: 2:1, and N-methyl-2-pyrrolidone (NMP) was used as a dispersion medium, thereby preparing a positive electrode slurry. Then, the positive electrode slurry was applied on a positive electrode current collector composed of an aluminum foil, the coating film was dried, compressed, and cut into a predetermined electrode size, thereby producing a positive electrode.

### [Electrolyte preparation]

To a solvent mixture in which ethylene carbonate (EC), ethyl methyl carbonate (EMC), and dimethyl carbonate (DMC) were mixed at a predetermined volume ratio, LiPF₆ was added as a lithium salt, thereby preparing an electrolyte.

### [Production of test cell]

A test cell was produced using the above-described positive electrode and a negative electrode composed of a lithium metal foil. An electrode body was made by disposing the above-described positive electrode and the negative electrode opposing each other with a separator interposed therebetween, and the electrode body was accommodated in a coin-shaped outer can. After injecting the electrolyte to the outer can, the outer can was sealed, thereby producing a coin-shaped test secondary battery.

### [Evaluation 1]

The secondary battery was subjected to constant current charging at a constant current of xC as described below to a battery voltage of 4.7 V, and subjected to constant voltage charging at 4.7 V until the electric current attenuated to 0.5 × xC under a normal temperature environment. Afterwards, the battery was rested for 20 minutes, and then subjected to constant current discharging at a constant current of xC to a battery voltage of 2 V. Afterwards, the battery was rested for 20 minutes, and the following measurement was performed likewise. Here, charge and discharge were performed with the value of x as follows: from the 1st to 3rd cycles, x = 0.01, from the 4th to 6th cycles, x = 0.05, from the 7th to 9th cycles, x = 0.1, from the 10th to 12th cycles, x = 0.01, from the 13th to 27th cycles, x = 0.1, from the 28th to 29th cycles, x = 0.01, from the 30th to 49th cycles, x = 0.1, and in the 50th cycle, x = 0.01. The discharge capacity in the constant current discharge was determined, and the battery voltage averaged by time determined from rate of battery voltage was regarded as the average discharge voltage of the battery voltage. In this measurement, 0.1 C corresponds to 18.4 mA/g.

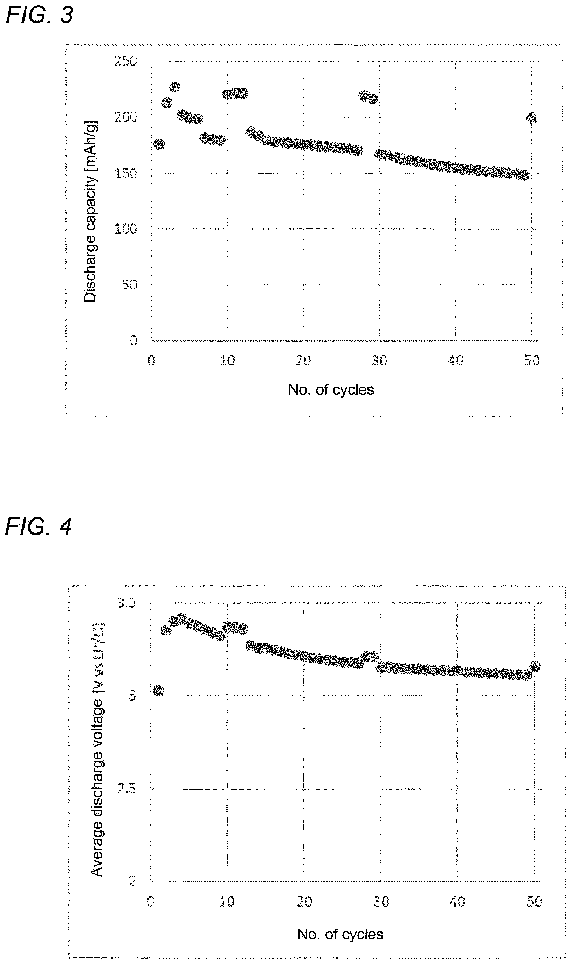

In the above-described repetitive charge and discharge, the discharge capacity at the 35th cycle was about 160 mAh/g, and the average discharge voltage at the 35th cycle was 3.14 V. FIG. 3 and FIG. 4 show the discharge capacity and the average discharge voltage of each cycle.

### [Evaluation 2]

The test battery was first subjected to constant current charging to 4.8 V at 0.1 C, and then rested for 20 minutes. Afterwards, constant current discharging was performed at 0.1 C as in the charging, to 2.0 V, and then rested for 20 minutes. Charge and discharge were repeated under the same conditions. In this measurement, 0.1 C corresponds to 18.3 mA/g.

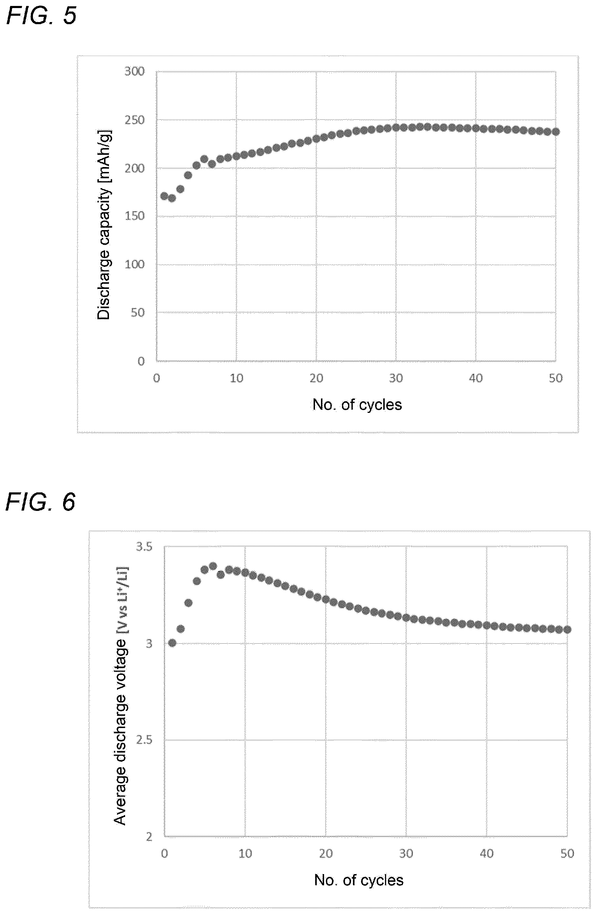

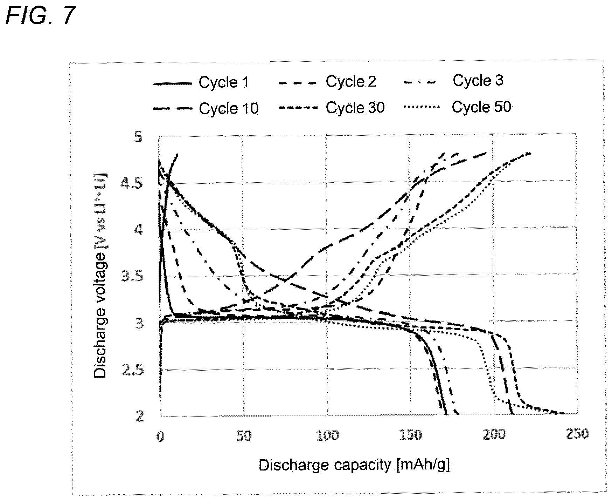

The discharge capacity and the average discharge voltage at the 35th cycle was about 242 mAh/g and 3.11 V, respectively. The discharge capacity and the average discharge voltage in each cycle are shown in FIG. 5 and FIG. 6. FIG. 7 shows a graph illustrating changes in the relationship between the voltage and the discharge capacity along with charge and discharge.

In Non-Patent Literature 1, Li₂MnO₃ is used as the positive electrode active material, constant current charging was performed at 20 mA/g to 4.8 V, and thereafter, constant current discharging was performed at the same electric current value to 2.0 V. The discharge capacity at the 35th cycle repeating this charge and discharge was about 80 mAh/g, and the average discharge voltage at the 35th cycle dropped to 2.8 V. The conditions for charge and discharge differ in the above-described Examples and Non-Patent Literature 1, but the discharge capacity at the 35th cycle in the above-described Example was performed with a constant electric current value near the conditions in Non-Patent Literature 1. In any of the cycles in which the measurement was performed with x = 0.1 C in the above-described Example, the capacity in the above-described Example was kept higher than that in Non-Patent Literature 1.

### [Industrial Applicability]

The composite oxide containing lithium and a transition metal of the present disclosure has a high capacity, and excellent durability, and therefore is useful for a positive electrode active material of a main power source for mobile communication devices, mobile electronic devices, etc.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing plug

## Claims

1. A composite oxide comprising lithium and a transition metal, wherein
at least a portion of the composite oxide has a crystal lattice of a hexagonal lattice, and an electron beam diffraction image obtained by irradiating an electron beam from a <2 -2 n> direction includes a first diffraction spot group and a second diffraction spot group, n being an integer of 1 or more,
the first diffraction spot group has a {-3 1 8/n} spot and a {1 2 2/n} spot that appear in correspondence with a period of a unit lattice of the hexagonal lattice, and
the second diffraction spot group has
six spots that appear between a central {0 0 0} spot and the {-3 1 8/n} spot with a 1/7 period, and
six spots that appear between the central {0 0 0} spot and the {1 2 2/n} spot with a 1/7 period.

2. The composite oxide comprising lithium and a transition metal of claim 1, wherein the composite oxide has an operating voltage in a range of 2 V or more and 4.9 V or less relative to an oxidation-reduction potential of metal lithium.

3. The composite oxide comprising lithium and a transition metal of claim 2, wherein the composite oxide develops a capacity by a redox reaction between a cation of the transition metal and an anion of oxygen in a range of the operating voltage.

4. The composite oxide comprising lithium and a transition metal of any one of claims 1 to 3, the composite oxide being represented by a general formula: LiₐM1_{b}O₂ (M1 is at least one selected from the group consisting of Cr, Mn, Fe, Co, and Ni, 0.14 ≤ a ≤ 1.2, and 0.8< b< 1).

5. The composite oxide comprising lithium and a transition metal of claim 4, the composite oxide being represented by a general formula: LiₐMnₓM2_{b}O₂ (M2 is at least one selected from the group consisting of Cr, Fe, Co, and Ni, 0.14 ≤ a ≤ 1.2, 0.8< x+ b< 1, and 0< b< 1).

6. A positive electrode active material for a secondary battery, the positive electrode active material comprising the composite oxide comprising lithium and a transition metal of claim 1.

7. A secondary battery comprising a positive electrode, a negative electrode, a separator interposed between the positive electrode and the negative electrode, and an electrolyte, wherein
the positive electrode includes the positive electrode active material for a secondary battery of claim 6.

8. A composite oxide comprising lithium and a transition metal, wherein
at least a portion of the composite oxide has a crystal lattice of a hexagonal lattice, and
an electron beam diffraction image of the hexagonal lattice has a √7 × √7 superlattice.

9. A composite oxide comprising lithium and a transition metal, wherein
at least a portion of the composite oxide has a crystal lattice of a hexagonal lattice, and
an electron beam diffraction image of the hexagonal lattice includes a first diffraction spot group that appears in correspondence with a period of a unit lattice of the hexagonal lattice, and a second diffraction spot group that appears between a center of the electron beam diffraction image and any of the first diffraction spot groups with a 1/7 period.
